# EUROPÄISCHE PATENTSCHRIFT

(11) **EP 0 468 305 B1**
(45) Veröffentlichungstag und Bekanntmachung des Hinweises auf die Patenterteilung: **22.02.1995**
(21) Anmeldenummer: 91111616.8
(22) Anmeldetag: 12.07.1991
(51) Int. Cl.: C08G 77/16, C08G 77/38, C09D 183/06, C03C 17/30

(54) **Härtbare Epoxygruppen aufweisende Organopolysiloxane, Verfahren zu ihrer Herstellung und ihre Verwendung als härtbare Beschichtungsmittel mit abhäsiven Eigenschaften**
Curable epoxy groups containing organopolysiloxanes, process for their preparation and their use as curable abhesive coating agents
Organopolysiloxanes ayant des groupes époxy durcissables, leur procédé de préparation et leur utilisation comme revêtements durcissables abhésives

(30) Priorität: 25.07.1990 DE 4023556
(43) Veröffentlichungstag der Anmeldung: 29.01.1992
(73) Patentinhaber: Th. Goldschmidt AG, 45127 Essen (DE)
(72) Erfinder: Jachmann, Jürgen, W-4690 Herne (DE); Weitemeyer, Christian, Dr., W-4300 Essen 1 (DE); Wewers, Dietmar, Dr., W-4250 Bottrop (DE)

(56) Entgegenhaltungen:
- EP-A- 0 355 381
- US-A- 4 640 940

## Beschreibung

Die Erfindung betrifft härtbare Epoxygruppen aufweisende Organopolysiloxane. Die Erfindung betrifft ferner Verfahren zur Herstellung dieser härtbare Epoxygruppen aufweisenden Organopolysiloxane und deren Verwendung als härtbare Beschichtungsmittel mit abhäsiven Eigenschaften, als Vergußmassen und als Beschichtungsmittel für Glasfasern.

Über härtbare Epoxysiloxane und deren Verwendung als Beschichtungsmittel mit abhäsiven Eigenschaften gibt es eine umfangreiche Patentliteratur. Aus der großen Anzahl von Patentschriften sei zunächst die US-PS 4 313 988 genannt. In dieser US-Patentschrift ist ein Produkt beschrieben, bestehend aus einem Trägerband mit einem druckempfindlichen Klebstoff, wobei auf einer Seite eine Lage eines normal klebenden und druckempfindlichen Klebstoffes vorgesehen ist und auf der anderen Oberfläche des Trägerbandes ein Material mit abhäsiven Eigenschaften angeordnet ist. Dieses Material besteht aus einem härtbaren Epoxypolysiloxan entweder in Lösung oder in 100 %iger Form, welches der Formel 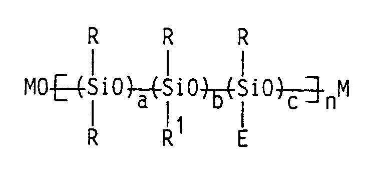
entspricht. In dieser Formel hat
- R: die Bedeutung einer niederen Alkylgruppe mit 1 bis 3 Kohlenstoffatomen;
- R¹: ist ein einwertiger Kohlenwasserstoffrest mit 4 bis 20 Kohlenstoffatomen;
- E: ist ein einwertiger Epoxygruppen enthaltender Kohlenwasserstoffrest;
- M: ist eine Silylgruppe der Formel R₃Si-, R₂R¹Si- oder R₂ESi-, wobei R, R¹ und E wie vorstehend definiert sind;
- a: hat einen Wert von 5 bis 200;
- b: ist 0 oder hat einen Wert bis zu 20 % des Wertes von a und
- a+b: ist 5 bis 200;
- c: kann den Wert 0 annehmen, wenn M die Gruppe R₂ESi ist, oder ist größer als 0, jedoch kleiner als 20 % des Wertes von a+b, wenn M die Gruppe R₃Si-, R₂R¹Si- oder R₂ESi- ist;
- n: hat einen Wert von 1 bis 75;
dabei muß die Bedingung erfüllt sein, daß der einwertige Epoxy enthaltende Kohlenwasserstoffrest E mindestens eine polymerisierbare Epoxygruppe der Formel 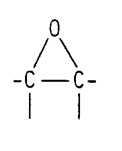
enthält, wobei der Rest der Gruppe E aus Kohlenstoff- und Wasserstoffatomen besteht und frei von acetylenischer Ungesättigtheit ist und wobei zusätzlich zu dem Oxiransauerstoff Ether, Carbonylsauerstoff oder die Gruppe 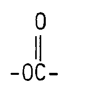
enthalten sein kann.

Die Zubereitung kann zusätzlich, bezogen auf Epoxypolysiloxan, bis zu 98 Gew.-% eines Epoxysilans enthalten.

In der vorgenannten US-PS 4 313 988 wird darauf hingewiesen, daß entsprechend dem Stand der Technik Überzüge mit abhäsiven Eigenschaften, also Trenneigenschaften, gegenüber Klebstoffen weit verwendet werden. Dimethylpolysiloxane ergeben Überzüge, von denen sich ein Klebeband mit der niedrigen Trennkraft von 4 bis 16 g/cm Bandbreite abziehen läßt. Dieses Maß gibt die Kraft an, die aufgewandt werden muß, um ein Klebeband der Breite 1 cm von der abhäsiv ausgerüsteten Oberfläche abzuziehen. Will man jedoch Klebebänder z.B. in Rollenform herstellen und abhäsiv ausrüsten, ist dieser Grad der Abhäsivität zu hoch, da es zu Instabilitäten der gewickelten Rolle kommt. Für solche Zwecke sind Überzüge erwünscht, deren Trennkräfte gegenüber Klebebändern gezielt erhöht sind und beispielsweise 60 bis 350 g/cm, insbesondere etwa 60 bis 200 g/cm, betragen.

Die Epoxysiloxane enthalten wenigstens eine polymerisierbare Epoxygruppe der Formel 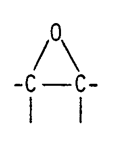
wobei die folgenden Gruppen als Beispiele genannt werden können: 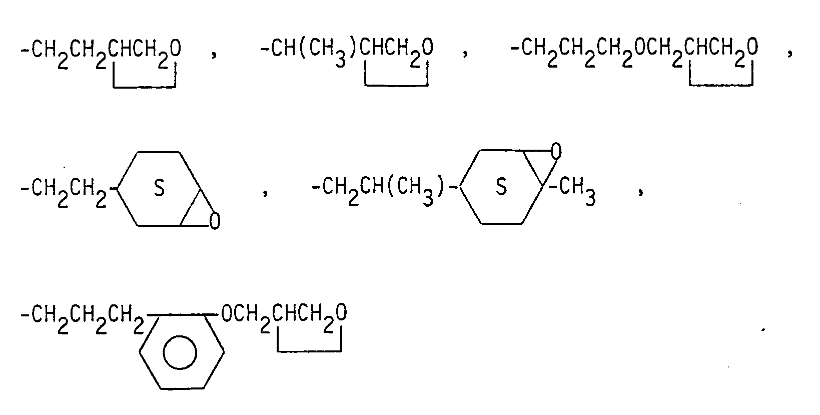
Die Epoxygruppen befinden sich vorzugsweise endständig am Kohlenwasserstoffrest.

Bevorzugte Epoxypolysiloxane der US-PS 4 313 988 sind solche der Formel 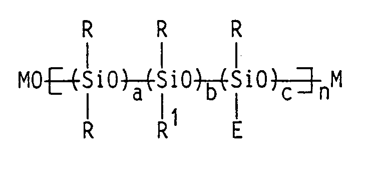
wobei R ein Methylrest ist, b einen Wert von 0 hat und die Gruppe E ein β-(3,4-Epoxycyclohexyl)ethyl- oder γ-Glycidoxypropylrest ist.

Die Härtung der Epoxypolysiloxane oder der Zubereitungen, die derartige Epoxypolysiloxane enthalten, erfolgt durch Zusatz und in Gegenwart von üblichen Epoxyhärtungskatalysatoren. Beispiele solcher Katalysatoren sind tertiäre Amine, Lewis-Säuren, wie z.B. BF₃, und deren Komplexe, wie z.B. mit Ethern oder Aminen, polyaromatische Iodonium- und Sulfoniumkomplexsalze, die als Anionen z.B. SbF₆- oder BF₄-Anionen enthalten. Man kann auch organische Säuren und deren Salze oder Derivate, wie z.B. perfluorierte Sulfonsäuren, als Härter verwenden.

Geeignete Härter sind auch in der US-PS 4 394 403 und der US-PS 4 310 469 beschrieben.

Es wird jedoch beim Zusatz der Härter sehr häufig beobachtet, daß, abhängig von der Struktur der Zubereitung, insbesondere der Siloxane, die Mischbarkeit und Löslichkeit der Photoinitiatoren (Härter) begrenzt ist. Man hat bereits epoxyfunktionelle Siloxane modifiziert, um deren Verträglichkeit mit Oniumsalz-Photoinitiatoren zu verbessern. So sind beispielsweise in der EP-A-0 334 068 epoxyfunktionelle Siloxane beschrieben, bei denen ein Teil der Epoxygruppen durch Umsetzung mit aromatischen Säuren, wie z.B. Benzoesäure, oder ungesättigten Säuren, wie z.B. Acrylsäure, verestert wurde. Hierdurch wird die Verträglichkeit der Epoxysiloxane mit den Härtungskatalysatoren erhöht, gleichzeitig jedoch der Gehalt an härtbaren Epoxygruppen erniedrigt. Epoxygruppen sind reaktive Gruppen. Sie können auch durch schwächere Säuren zur Polymerisation aktiviert werden. Dies macht eine kontrollierte Umsetzung äußerst schwierig. Im extremen Fall kann die Reaktion außer Kontrolle geraten und zur Vergelung führen. Des weiteren müssen Restgehalte an Säure beseitigt werden, um eine Lagerstabilität zu gewährleisten.

In der EP-OS 0 355 381 ist ein Organopolysiloxan mit modifiziertem Release-Verhalten der allgemeinen Formel RₐR$\frac{\text{1}}{\text{b}}$SiO_{(4-a-b)/2} beschrieben. Dabei ist R ein Wasserstoffrest, ein Alkylrest mit 1 bis 8 Kohlenstoffatomen oder ein Arylrest. R¹ ist ein einwertiger phenolischer Rest mit 6 bis 26 Kohlenstoffatomen. a ist 0, 1 oder 2; b ist 1, 2 oder 3 und a+b ist 1, 2 oder 3. Das Organopolysiloxan enthält ferner Einheiten der Formel RₐR$\frac{\text{2}}{\text{c}}$SiO_{(4-a-b)/2}, wobei R und a wie vorstehend definiert sind. R² ist ein Wasserstoffrest, ein einwertiger organofunktioneller Acrylrest oder ein einwertiger organofunktioneller Epoxyrest. c ist 1, 2 oder 3; a+b ist 1, 2 oder 3. Die Trennkraft eines solchen Siloxans wird dabei durch den Gehalt an einwertigen phenolischen Resten modifiziert. Je höher der Gehalt an phenolischen Resten ist, um so geringer sind die Release-Eigenschaften des Siloxans. Infolge der hohen Acidität der phenolischen Hydroxylgruppe ergeben sich jedoch bei Herstellung und Lagerung dieser modifizierten Siloxane erhebliche Probleme. Durch die phenolische OH-Gruppe können die Epoxygruppen zur Polymerisation aktiviert werden, was zur unerwünschten Vergelung und vorzeitigen Aushärtung der modifizierten Siloxane führt.

Der vorliegenden Erfindung liegt die Aufgabe zugrunde, härtbare Epoxygruppen aufweisende Organopolysiloxane aufzufinden und bereitzustellen, welche eine gute Verträglichkeit gegenüber Photoinitiatoren aufweisen, ohne die oben erwähnten Nachteile aufzuweisen. Es wird außerdem angestrebt, durch die Modifizierung der Epoxysiloxane deren Haftung auf dem Untergrund zu verbessern und gleichzeitig die Möglichkeit zu geben, die Release-Eigenschaften entsprechend dem Anwendungszweck zu modifizieren, d.h. auf den Anwendungszweck einzustellen.

Es wurde nun gefunden, daß in bestimmter Weise aufgebaute und modifizierte Epoxygruppen aufweisende Organopolysiloxane diese Forderungen erfüllen. Ein Gegenstand der vorliegenden Erfindung sind deshalb härtbare Epoxygruppen aufweisende Organopolysiloxane der allgemeinen durchschnittlichen Formel 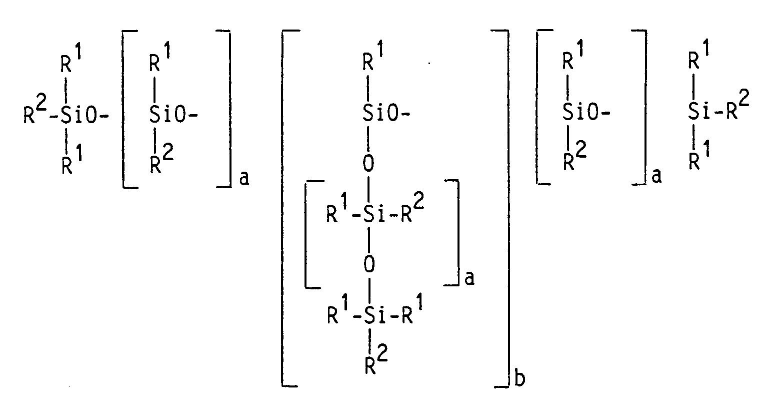
wobei
- R¹: im Molekül gleich oder verschieden ist und Alkylreste mit 1 bis 4 Kohlenstoffatomen bedeutet, jedoch mindestens 90 % der Reste R¹ Methylreste sind,
- R²: folgende Bedeutung haben kann:
a) Alkylreste mit 1 bis 20 Kohlenstoffatomen, Aryl- oder Aralkylreste,
b) Epoxyreste, die über Si-C-Bindungen mit Si-Atomen des Polysiloxans verknüpft sind,
c) Reste der allgemeinen Formel -R³OH,
wobei
- R³: ein zweiwertiger Alkylenrest mit 3 bis 11, bevorzugt 3 bis 6 Kohlenstoffatomen ist,
- a: einen Wert von 1 bis 1000 und
- b: einen Wert von 0 bis 10 hat,
mit der Maßgabe, daß im durchschnittlichen Organopolysiloxanmolekül mindestens jeweils ein Rest R² die Bedeutung b) und die Bedeutung c) hat.

Ein wesentliches Merkmal der erfindungsgemäßen Organopolysiloxane besteht somit darin, daß neben Epoxyresten, die über Si-C-Bindungen mit Si-Atomen des Polysiloxans verknüpft sind, Reste der Formel -R³OH vorhanden sein müsen. Diese Reste -R³OH sind ebenfalls mit Si-Atomen des Polysiloxans verknüpft. Dabei greifen die Reste -R³OH in den Härtungsmechanismus ein, beeinflussen die Release-Eigenschaften und die Haftung am Untergrund. Die üblichen Photoinitiatoren, wie z.B. Di-(dodecylphenyl)iodoniumhexafluorantimonat, können in den Epoxygruppen aufweisenden, erfindungsgemäßen Organopolysiloxanen besser verteilt bzw. besser gelöst werden.

Im folgenden wird die Bedeutung der Reste und Indices noch näher erläutert.

R¹ kann innerhalb des durchschnittlichen Polysiloxanmoleküls gleich sein oder unterschiedliche Bedeutung haben, wobei R¹ Alkylreste mit 1 bis 4 Kohlenstoffatomen bedeutet. Mindestens 90 % der Reste R¹ und vorzugsweise 100 % der Reste R¹ sind Methylreste.

Die Reste R² können folgende Bedeutung haben:
Alkylreste mit 1 bis 20 Kohlenstoffatomen, Aryl- oder Aralkylreste. Als Alkylreste sind die geradkettigen Alkylreste bevorzugt. Beispiele geeigneter Alkylreste sind der Methyl-, Ethyl-, Propyl-, Butyl-, Hexyl-, Octyl-, Decyl- und Hexadecylrest. Als Arylrest ist der Phenylrest, als Aralkylrest der Benzylrest bevorzugt. Durch die geeignete Wahl der Alkylreste können die Epoxygruppen aufweisenden Organopolysiloxane in ihren Release-Eigenschaften beeinflußt und dem jeweiligen Klebstoff, gegenüber dem sie Release-Eigenschaften entfalten sollen, angepaßt werden. Mit zunehmender Kohlenstoffanzahl der Reste R² steigt deren Verträglichkeit mit den organischen Klebstoffen, wobei im allgemeinen die Release-Eigenschaften erniedrigt werden.

R² hat ferner die Bedeutung von Epoxyresten, die über Si-C-Bindungen mit Si-Atomen des Polysiloxans verknüpft sind. Als Beispiele solcher Epoxyreste wird auf die eingangs beschriebenen Epoxyreste hingewiesen. Besonders bevorzugte Epoxyreste sind: 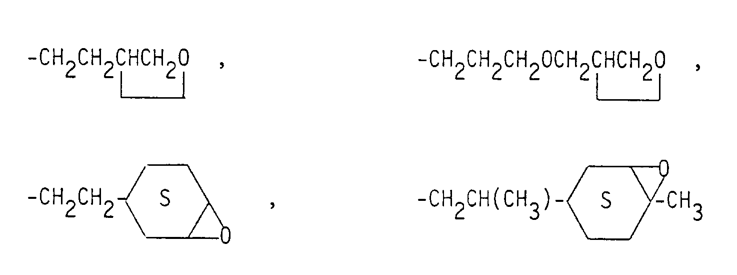
Die Reste R² haben ferner die Bedeutung eines Restes der Formel -R³OH, wobei R³ ein zweiwertiger Alkylenrest mit 3 bis 11 Kohlenstoffatomen ist. Bevorzugt ist R³ ein zweiwertiger Alkylenrest mit 3 bis 6 Kohlenstoffatomen. Dies ergibt sich aus der Zugänglichkeit der Reste.

Im durchschnittlichen erfindungsgemäßen Organopolysiloxanmolekül muß jeweils ein Rest R² die Bedeutung eines Epoxyrestes und mindestens ein Rest R² die Bedeutung eines -R³OH-Restes haben.

Der Index a gibt die Anzahl der difunktionellen Siloxyeinheiten an. Er hat einen Wert von 1 bis 1000, vorzugsweise einen Wert von 5 bis 200.

b gibt die Anzahl der trifunktionellen Siloxyeinheiten an, ist also ein Maß für die Verzweigung und hat im durchschnittlichen Molekül einen Wert von 0 bis 10, insbesondere einen Wert von 0 bis 2. Da lineare Organopolysiloxane bevorzugt sind, hat b insbesondere einen Wert von 0.

Bevorzugt sind erfindungsgemäße Epoxygruppen aufweisende Organopolysiloxane, welche im Mittel 2 bis 30 Epoxyreste und 1 bis 10 -R³OH-Reste aufweisen. Besonders bevorzugt sind Organopolysiloxane mit 2 bis 10 Epoxyresten und 1 bis 5 -R³OH-Resten.

Beispiele geeigneter, erfindungsgemäßer, härtbare Epoxygruppen aufweisender Organopolysiloxane sind:

### Verbindung 1

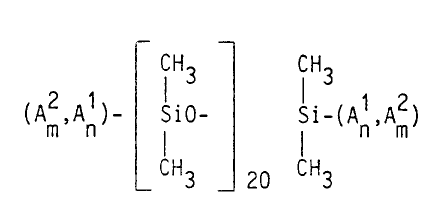

- A¹: = 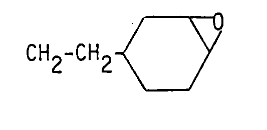
- A²: = CH₂-CH₂-CH₂-OH
- n: = 0,5
- m: = 0,5

### Verbindung 2

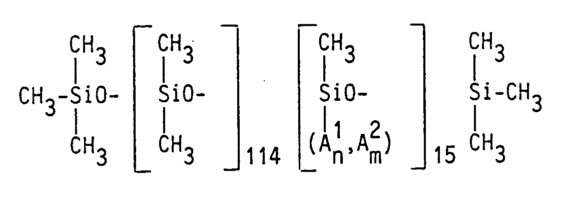

- A¹: = wie in Verbindung 1 definiert
- A²: = wie in Verbindung 1 definiert
- n: = 0,5
- m: = 0,5

### Verbindung 3

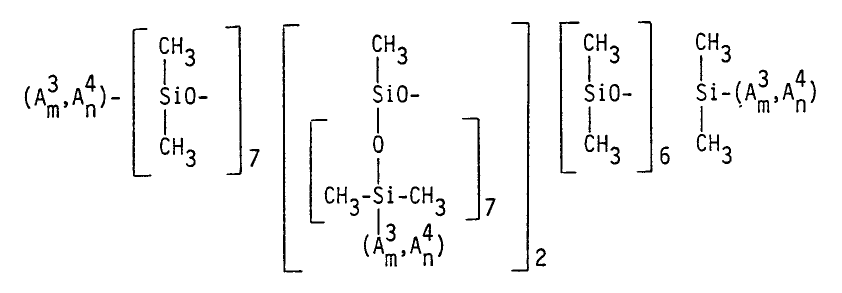

- A³: = 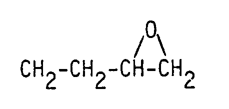
- A⁴: = 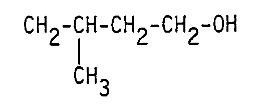
- n: = 0,25
- m: = 0,75

### Verbindung 4

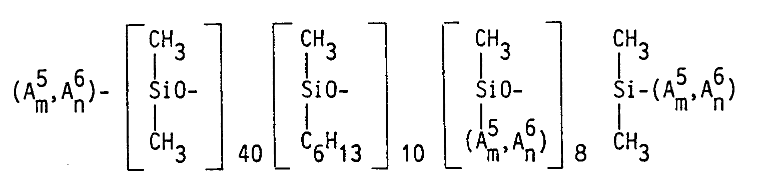

- A⁵: = 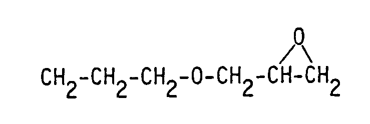
- A⁶: = 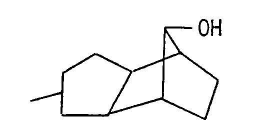
- n: = 0,15
- m: = 0,85

### Verbindung 5

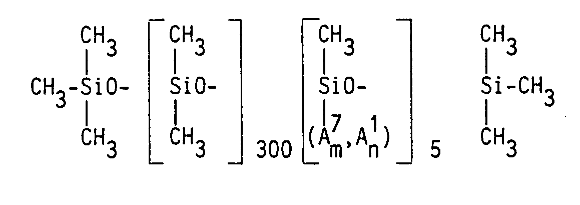

- A¹: = wie in Verbindung 1 definiert,
- A⁷: = 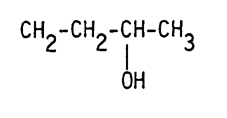
- n: = 0,2
- m: = 0,8

In der letzten europäischen Patentanmeldung EP-A-0 391 162 A2 wird eine photopolymerisierbare Zubereitung zum Beschichten beansprucht, die als Komponente (A) ein epoxyfunktionelles Diorganopolysiloxan der allgemeinen Formel

R₂R'SiO(RR'SiO)ₓSiR₂R'

enthält, wobei
- R: eine Alkylgruppe mit 1 bis 8 C-Atomen,
- R': = R oder ein einwertiger, epoxyfunktioneller organischer Rest mit 2 bis 20 C-Atomen ist,
mit der Maßgabe, daß wenigstens 2 Reste R' einwertige, epoxyfunktionelle organische Reste sind und
- x: einen Wert von 0 bis 20 hat.

Mit den Verbindungen dieser letzten europäischen Patentanmeldung sind nur solche erfindungsgemäßen Verbindungen vergleichbar, bei denen der Index b = 0 ist. Die erfindungsgemäßen Verbindungen unterscheiden sich aber auch dann noch von den epoxyfunktionellen Siloxanen der EP-A-0 391 162 A2 durch die Bedingung, daß im durchschnittlichen Molekül ein Rest R² ein R³-OH-Rest sein muß. Diese Bedingung ist aber für die Erzielung der angestrebten Eigenschaften wesentlich.

Ein weiterer Gegenstand der vorliegenden Erfindung besteht in einem Verfahren zur Herstellung der erfindungsgemäßen, Epoxygruppen enthaltenden Polysiloxane. Dieses Verfahren ist dadurch gekennzeichnet, daß man Organopolysiloxane der allgemeinen durchschnittlichen Formel 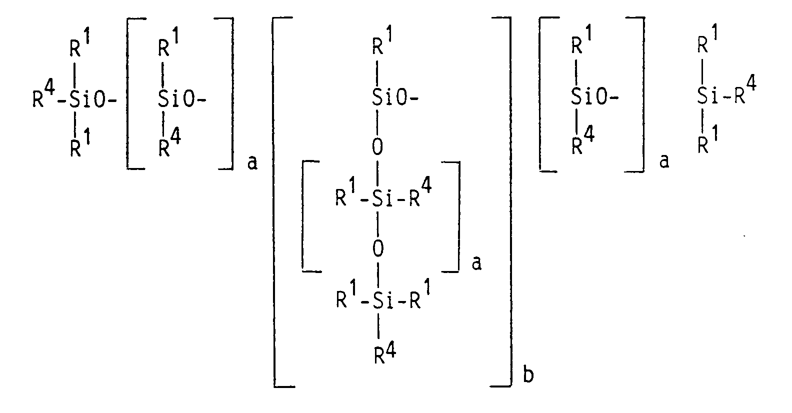
wobei
- R¹: im Molekül gleich oder verschieden ist und Alkylreste mit 1 bis 4 Kohlenstoffatomen bedeutet, jedoch mindestens 90 % der Reste R¹ Methylreste sind,
- R⁴: folgende Bedeutung haben kann:
a) Alkylreste mit 1 bis 20 Kohlenstoffatomen, Aryl- oder Aralkylreste,
b) Epoxyreste, die über Si-C-Bindungen mit Si-Atomen des Polysiloxans verknüpft sind,
c) Wasserstoffreste,
- a: einen Wert von 1 bis 1000 und
- b: einen Wert von 0 bis 10 hat,
mit der Maßgabe, daß im durchschnittlichen Organopolysiloxanmolekül mindestens jeweils ein Rest R⁴ die Bedeutung b) und die Bedeutung c) hat,
mit Verbindungen der allgemeinen Formel R⁵OH, wobei R⁵ ein Alkenylrest mit einer endständigen olefinischen Doppelbindung, welcher 3 bis 11 Kohlenstoffatome aufweist, ist, in Gegenwart eines Katalysators und gegebenenfalls in Gegenwart eines inerten Lösungsmittels bei Temperaturen von 50 bis 150°C in an sich bekannter Weise und in solchen Mengenverhältnissen umsetzt, daß das Epoxysiloxan im durchschnittlichen Molekül mindestens einen Rest -R³OH aufweist.

Die Einführung der Reste -R³OH erfolgt somit durch Addition der entsprechenden Alkohole mit einer endständigen olefinischen Doppelbindung an ein Epoxygruppen aufweisendes Organopolysiloxan, welches zusätzlich noch SiH-Gruppen aufweist. Diese Addition erfolgt in an sich bekannter Weise in Gegenwart eines Hydrosilylierungskatalysators, insbesondere in Gegenwart von Platinkatalysatoren, wie z.B. H₂PtCl₆, (NH₃)₂PtCl₂, Pt-Kohle. Die Reaktion wird gegebenenfalls und vorzugsweise in Gegenwart eines inerten Lösungsmittels durchgeführt. Beispiel eines solchen inerten Lösungsmittels ist Toluol oder Xylol. Die Umsetzung erfolgt bei Temperaturen von 50 bis 150°C und verläuft in einer dem Fachmann an sich bekannten Weise.

Ein weiteres Verfahren zur Herstellung der erfindungsgemäßen Polysiloxane ist dadurch gekennzeichnet, daß man Organopolysiloxane der allgemeinen durchschnittlichen Formel 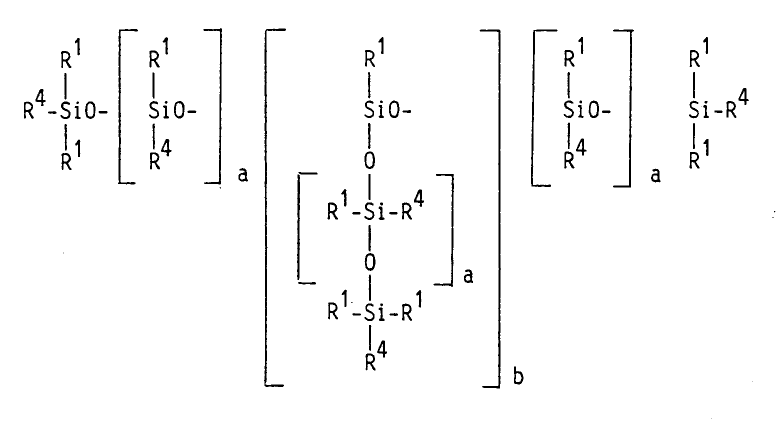
wobei
- R¹: im Molekül gleich oder verschieden ist und Alkylreste mit 1 bis 4 Kohlenstoffatomen bedeutet, jedoch mindestens 90 % der Reste R¹ Methylreste sind,
- R⁴: folgende Bedeutung haben kann:
a) Alkylreste mit 1 bis 20 Kohlenstoffatomen, Aryl- oder Aralkylreste,
b) Wasserstoffreste,
- a: einen Wert von 1 bis 1000 und
- b: einen Wert von 0 bis 10 hat,
mit der Maßgabe, daß im durchschnittlichen Organopolysiloxanmolekül mindestens zwei Reste R⁴ die Bedeutung eines Wasserstoffrestes haben,
mit einem Gemisch aus Epoxiden, welche endständig eine olefinische Doppelbindung aufweisen, und Verbindungen der allgemeinen Formel R⁵OH, wobei R⁵ ein Alkenylrest mit einer endständigen olefinischen Doppelbindung, welcher 3 bis 11 Kohlenstoffatome aufweist, ist, in Gegenwart eines Katalysators und gegebenenfalls in Gegenwart eines inerten Lösungsmittels bei Temperaturen von 50 bis 150°C in an sich bekannter Weise und in solchen Mengenverhältnissen umsetzt, daß das Organopolysiloxan im durchschnittlichen Molekül mindestens einen Epoxyrest und mindestens einen Rest -R³OH aufweist.

Die Durchführung der Reaktion geschieht in der gleichen Weise wie bei dem bereits oben beschriebenen Verfahren.

Ein weiterer Gegenstand der Erfindung besteht in der Verwendung der erfindungsgemäßen Organopolysiloxane alleine oder in Mischung mit Epoxygruppen aufweisenden Verbindungen, insbesondere Epoxypolysiloxanen, die frei von -R³OH-Gruppen sind, als härtbare Beschichtungsmittel mit abhäsiven Eigenschaften, als Vergußmassen, insbesondere für die Elektrik und Elektronik sowie als Beschichtungsmittel für Glasfasern.

Die erfindungsgemäßen Organopolysiloxane können insbesondere als Überzüge benutzt werden, die gegenüber Haftklebern von Etiketten, dekorativen Laminaten, Transferpapieren und Transferbändern Trennwirkung entfalten. Sie können außerdem zur Herstellung von nicht klebenden Verpackungsmaterialien für Nahrungsmittel und als industrielle Verpackungsmittel eingesetzt werden. Dabei dienen als Trägerbahnen für die abhäsiven Beschichtungen insbesondere Papierbahnen oder Folien aus Polyethylen, Polypropylen oder Polyestern.

Die erfindungsgemäßen Organopolysiloxane können mit Vorteil zur Herstellung von Druckfarben und dekorativen Überzügen eingesetzt werden.

Ein weiterer bevorzugter Verwendungszweck der erfindungsgemäßen Organopolysiloxane besteht darin, daß man sie allein oder in Mischung mit anderen härtbaren Verbindungen als Vergußmassen einsetzt. Diese Vergußmassen werden insbesondere für elektrische oder elektronische Bauteile, wie bestückte Platinen, Schaltelemente, Stecker und dgl. verwendet, welche dem Einfluß von aggressiven Medien, Feuchtigkeit und dgl. ausgesetzt sind.

Man kann die erfindungsgemäßen Verbindungen oder deren Abmischungen auch zum Beschichten von Glasfasern verwenden, die insbesondere zur Herstellung von Lichtwellenleitern bestimmt sind. Durch die Beschichtung werden die Glasfasern vor Beschädigungen und schädigenden äußeren Einflüssen bewahrt, und gleichzeitig wird die Reflexion der Glasfasern durch das Beschichtungsmittel beeinflußt.

Die erfindungsgemäßen, härtbare Epoxygruppen aufweisenden, modifizierten Organopolysiloxane können für sich allein nach Zusatz von üblichen Photoinitiatoren, die in einer Menge von 0,01 bis 7 Gew.-%, bezogen auf Organopolysiloxan, zugesetzt werden, als härtbare Beschichtungsmittel eingesetzt werden. Dabei können diese Zubereitungen gegebenenfalls zum Zweck des besseren Auftragens Lösungsmittel enthalten. Bevorzugt sind jedoch lösungsmittelfreie Zubereitungen. Man kann die erfindungsgemäßen Organopolysiloxane jedoch auch üblichen, Epoxygruppen enthaltenden Organopolysiloxanen des Standes der Technik zusetzen, um deren Eigenschaften bei der gemeinsamen Aushärtung zu beeinflussen und zu modifizieren.

Die erfindungsgemäßen Organopolysiloxane können mit nichtreaktiven oder reaktiven Zusätzen vermischt werden. Nichtreaktive Zusätze sind z.B. Füllstoffe oder Pigmente, wie Aerosil, Titandioxid, Bariumsulfat.

Reaktive Zusätze sind kationisch härtbare Verbindungen, die zusammen mit den erfindungsgemäßen Verbindungen ausgehärtet werden können und mit diesen vernetzen.

In den folgenden Beispielen wird zunächst die Herstellung der erfindungsgemäßen, härtbare Epoxygruppen aufweisenden, modifizierten Organopolysiloxane beschrieben, und in den nachfolgenden anwendungstechnischen Vergleichsversuchen werden die Eigenschaften der erfindungsgemäßen Organopolysiloxane mit solchen des Standes der Technik verglichen.

### Beispiel 1

Zu einer Mischung von 496 g (4,0 Mol) Vinylcyclohexenoxid, 154 g (2,6 Mol) Allylalkohol und 16 mg H₂PtCl₆ . 6 H₂O werden bei 120°C 1942 g (1 Mol) eines Si-H-Gruppen enthaltenden Polydimethylsiloxans der durchschnittlichen Formel 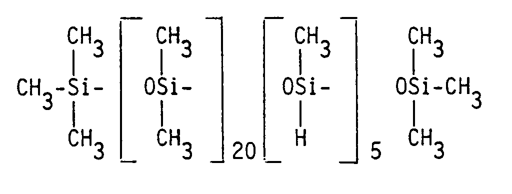
zugetropft. Nach Beendigung des Zutropfens wird noch 6 h bei 130°C gerührt. Nach Filtration und Abziehen der flüchtigen Reaktionsprodukte bei 120°C/0,1 mbar werden 2351 g (93 % der Theorie) eines mittelviskosen Öls erhalten, dem laut ¹H-NMR-Spektrum die allgemeine Formel 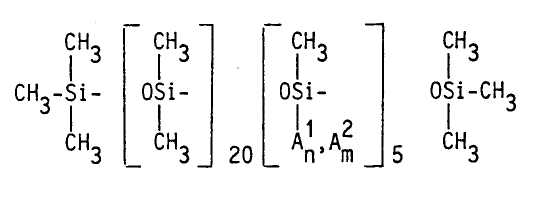
- A¹: = wie in Verbindung 1 definiert
- A²: = wie in Verbindung 1 definiert
- n: = 0,6
- m: = 0,4
zukommt.

### Beispiel 2

Analog zu Beispiel 1 wird aus 376 g (3,3 Mol) Allylglycidether, 191 g (3,3 Mol) Allylalkohol und 2187 g eines Si-H-Gruppen enthaltenden Polydimethylsiloxans (siehe Beispiel 1) ein Polydimethylsiloxan der allgemeinen Formel 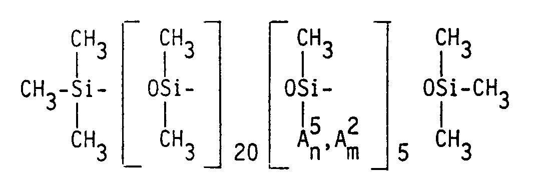
- A²: = wie in Verbindung 1 definiert
- A⁵: = wie in Verbindung 5 definiert
- n: = 0,5
- m: = 0,5
erhalten.

### Beispiel 3

Analog zu Beispiel 1 wird aus 50,0 g (0,4 Mol) Vinylcyclohexenoxid, 15,3 g (0,26 Mol) Allylalkohol und 1159 g (0,1 Mol) eines Si-H-Gruppen enthaltenden Polydimethylsiloxans der allgemeinen Formel 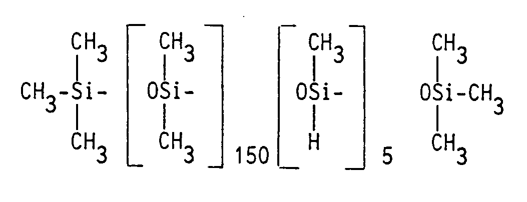
ein Polydimethylsiloxan der allgemeinen Formel 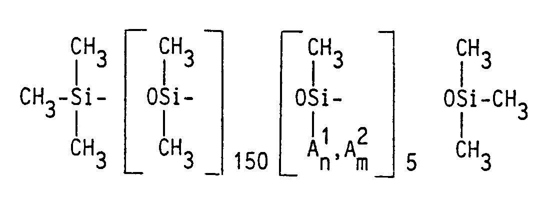
- A¹: = wie in Verbindung 1 definiert
- A²: = wie in Verbindung 1 definiert
- n: = 0,6
- m: = 0,4
erhalten.

### Beispiel 4

Analog zu Beispiel 1 wird aus 49 g (0,7 Mol) Butadienmonoepoxid, 12,9 g (0,15 Mol) 3-Methyl-3-buten-1-ol und 1156 g (0,05 Mol) eines Si-H-Gruppen enthaltenden Polydimethylsiloxans der allgemeinen Formel 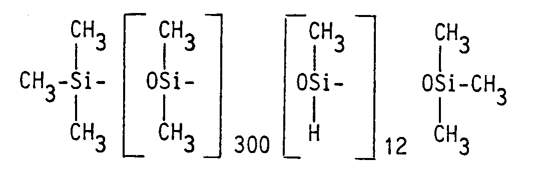
ein Polydimethylsiloxan der allgemeinen Formel 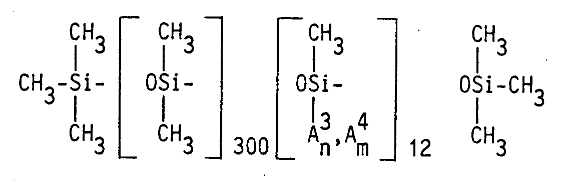
- A³: = wie in Verbindung 3 definiert
- A⁴: = wie in Verbindung 3 definiert
- n: = 0,83
- m: = 0,17
erhalten.

### Beispiel 5

Analog zu Beispiel 1 wird aus 136,4 g (1,1 Mol) Vinylcyclohexenoxid, 95,7 g (1,1 Mol) 3-Methyl-3-buten-1-ol und 1538 g (1 Mol) eines Si-H-Gruppen enthaltenden Polydimethylsiloxans der durchschnittlichen Formel 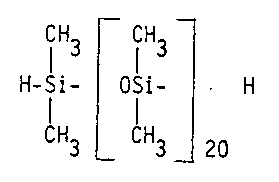
ein Polydimethylsiloxan der allgemeinen Formel 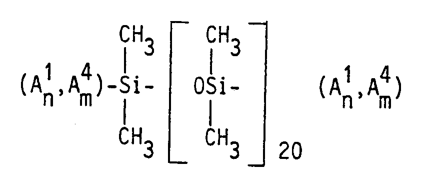
- A¹: = wie in Verbindung 1 definiert
- A⁴: = wie in Verbindung 3 definiert
- n: = 0,5
- m: = 0,5
erhalten.

### Beispiel 6

Analog zu Beispiel 1 wird aus 231 g (3,3 Mol) Butadienmonoepoxid, 95,7 g (1,1 Mol) 3-Methyl-3-buten-1-ol und 2194 g (1 Mol) eines Si-H-Gruppen enthaltenden Polydimethylsiloxans ein Polydimethylsiloxan der mittleren Formel 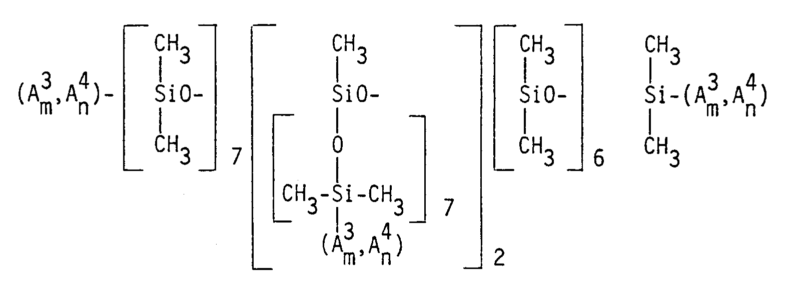
- A³: = wie in Verbindung 3 definiert
- A⁴: = wie in Verbindung 3 definiert
- n: = 0,25
- m: = 0,75
erhalten.

### Beispiel 7

Analog zu Beispiel 1 wird aus 115,9 g (0,9 Mol) Vinylcyclohexenoxid, 24,8 g (0,17 Mol) 8(9)-Hydroxy-tricyclo[5.2.1.0 ^{2,6}]dec-3-en und 494 g (0,1 Mol) eines Polysiloxans der durchschnittlichen Formel 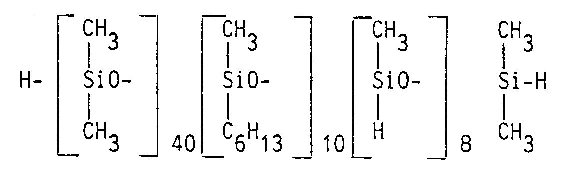
ein Siloxan der allgemeinen Formel 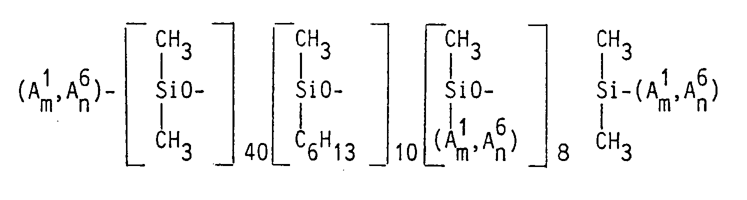
- A¹: = wie in Verbindung 1 definiert
- A⁶: = wie in Verbindung 4 definiert
- n: = 0,15
- m: = 0,85
hergestellt.

### Beispiel 8

Analog zu Beispiel 1 wird aus 115,9 g (0,9 Mol) Vinylcyclohexenoxid, 24,8 g (0,17 Mol) 8(9)-Hydroxy-tricyclo[5.2.1.0 ^{2,6}]dec-3-en und 424 g (0,1 Mol) eines Si-H-Gruppen enthaltenden Polydimethylsiloxans ein Polydimethylsiloxan der mittleren Formel 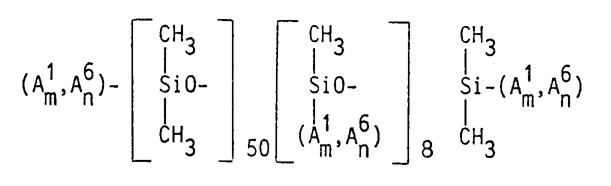
- A¹: = wie in Verbindung 1 definiert
- A⁶: = wie in Verbindung 4 definiert
- n: = 0,15
- m: = 0,85
erhalten.

### Beispiel 9

Analog zu Beispiel 1 wird aus 68,2 g (0,55 Mol) Vinylcyclohexenoxid, 55,4 g (0,77 Mol) Methallylalkohol und 2308 g eines Si-H-Gruppen enthaltenden Polydimethylsiloxans ein Polydimethylsiloxan der durchschnittlichen Formel 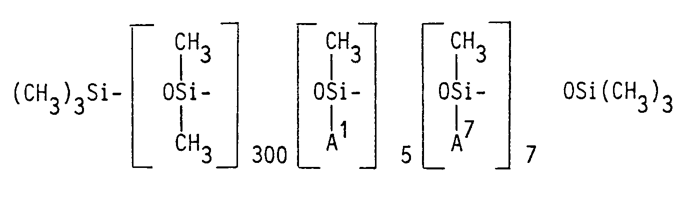
- A¹: = wie in Verbindung 1 definiert
- A⁷: = wie in Verbindung 5 definiert
hergestellt.

### Beispiel 10

Analog zu Beispiel 1 wird aus 68,2 g (0,55 Mol) Vinylcyclohexenoxid, 55,4 g (0,77 Mol) Methallylalkohol und 2798,2 g eines Si-H-Gruppen enthaltenden Polydimethylsiloxans ein Polydimethylsiloxan der durchschnittlichen Formel 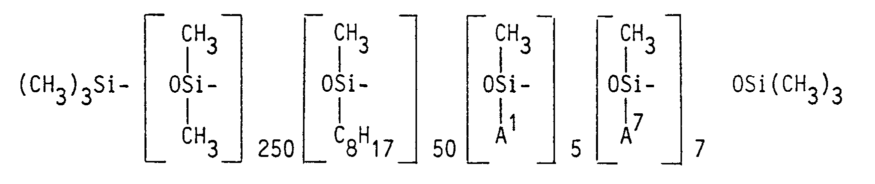
- A¹: = wie in Verbindung 1 definiert
- A⁷: = wie in Verbindung 5 definiert
hergestellt.

### Versuchsbeispiele 1 bis 3 (nicht erfindungsgemäß)

Analog zu Beispiel 1 werden aus Vinylcyclohexenoxid und Si-H-Gruppen enthaltenden Polydimethylsiloxanen Polydimethylsiloxane folgender durchschnittlicher Formeln hergestellt

### Versuchsbeispiel 1

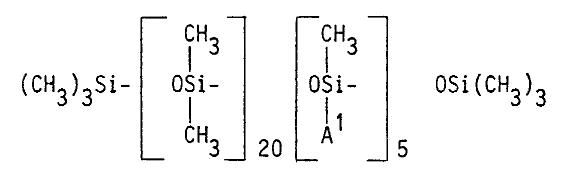

### Versuchsbeispiel 2

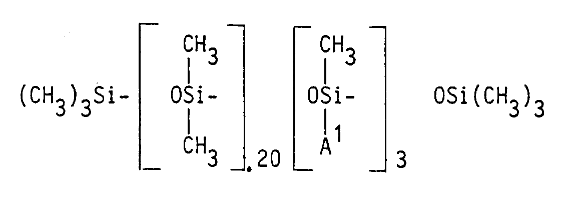

### Versuchsbeispiel 3

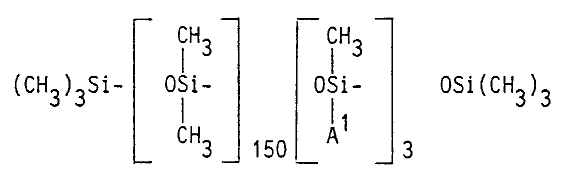

### Anwendungstechnische Prüfungen

Zur Überprüfung der anwendungstechnischen Eigenschaften der erfindungsgemäß modifizierten Polysiloxane werden die Verbindungen 1 bis 10 mit 1 Gew.-% Bis(dodecylphenyl)iodoniumhexafluoroantimonat versetzt, auf eine orientierte Polypropylenfolie aufgetragen und mit einer Fusion UV-Lampe (120 W/cm) gehärtet. Die Auftragsmenge beträgt in jedem Falle ca. 1,1 g/cm². Für die Vergleichsbeispiele werden verschiedene, 80 mm breite Klebebänder verwendet, und zwar mit Acrylatklebern beschichtete Klebebänder, die im Handel unter der Bezeichnung Tesa ® 154 und Tesa® 970 erhältlich sind, sowie ein mit Kautschukkleber beschichtetes Klebeband, welches im Handel unter der Bezeichnung Tesa ® 969 erhältlich ist.

Zur Messung der Abhäsivität werden diese Klebebänder auf den Untergrund aufgewalzt und anschließend im Falle der Acrylatklebebänder bei 70°C und im Falle des Kautschukklebebandes bei 40°C gelagert. Nach 24 Stunden wird die Kraft gemessen, die benötigt wird, um das jeweilige Klebeband unter einem Schälwinkel von 180° vom Untergrund abzuziehen. Diese Kraft wird als Trennkraft bezeichnet. Außerdem erfolgt eine Prüfung der Adhäsion der modifizierten Polysiloxane auf dem Substrat durch kräftiges Reiben mit dem Daumen. Bei mangelnder Haftung bilden sich gummiartige Krümel (sogenannter "Rub off" Test).

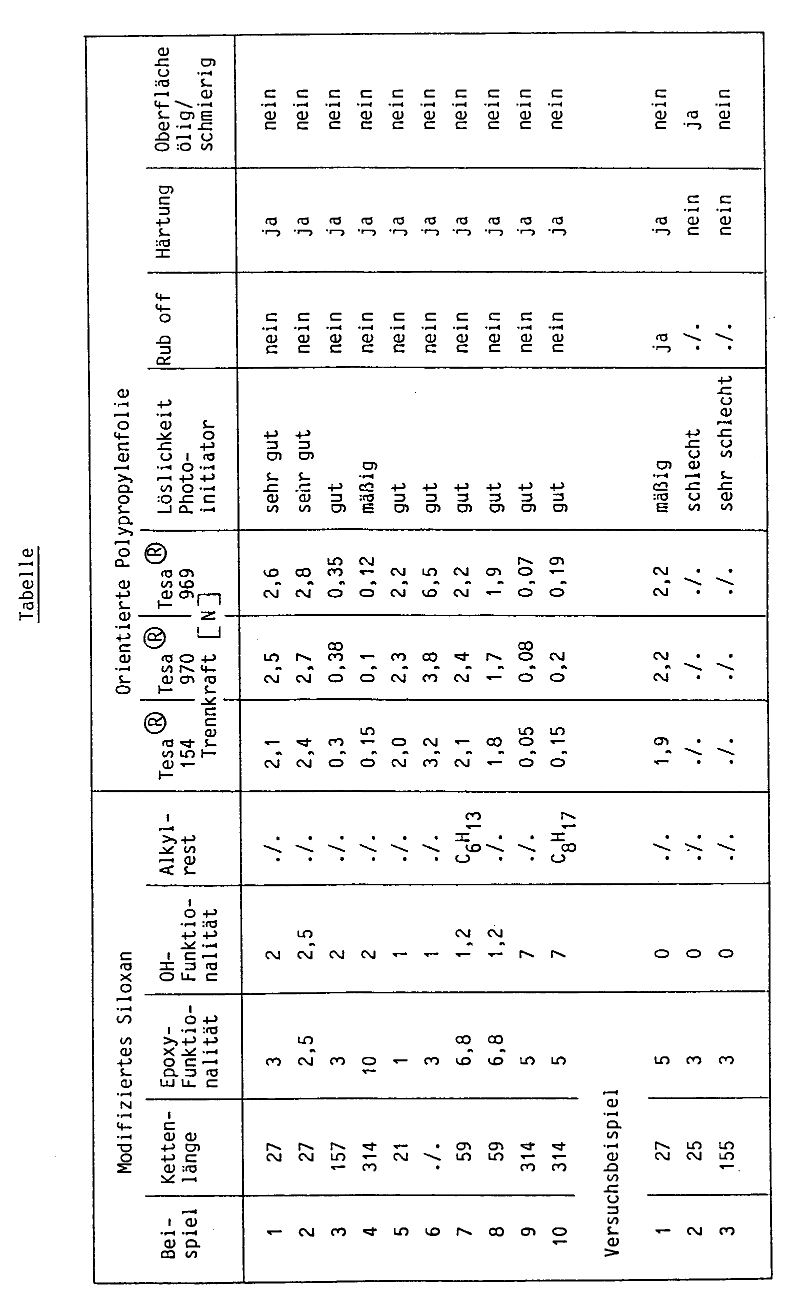

Aus der Tabelle ergibt sich, daß die erfindungsgemäß modifizierten Organopolysiloxane die gewünschten anwendungstechnischen Eigenschaften aufweisen. Sie zeigen eine gute Haftung auf dem Träger, lassen sich schnell aushärten, zeigen gute abhäsive Eigenschaften gegenüber chemisch verschiedenartig aufgebauten Klebern, lassen sich im Gegensatz zum Stand der Technik durch eine geeignete Wahl der Substituenten bei gleichem Siloxangerüst auf den chemischen Charakter des Klebstoffes einstellen und zeigen eine gute Verträglichkeit gegenüber Photoinitiatoren. Besonders auffallend ist, daß die erfindungsgemäß modifizierten Organopolysiloxane, bedingt durch den Synergismus von Epoxyrest und R³-OH-Rest, bei einer geringeren Epoxy-Funktionalität noch anstandslos härten.

## Patentansprüche

1. Härtbare Epoxygruppen aufweisende Organopolysiloxane der allgemeinen durchschnittlichen Formel 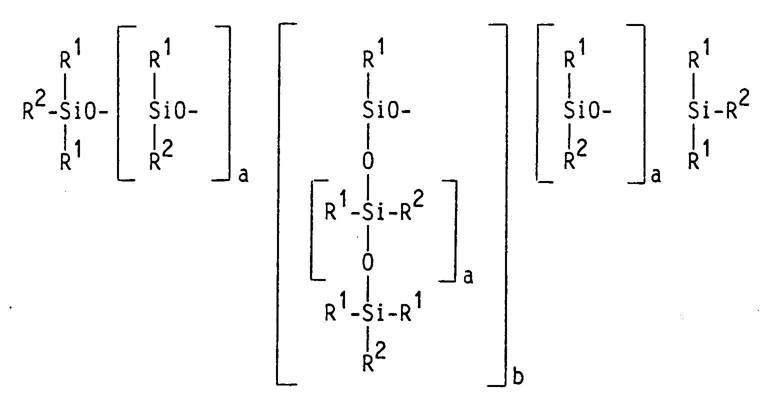 wobei
R¹ im Molekül gleich oder verschieden ist und Alkylreste mit 1 bis 4 Kohlenstoffatomen bedeutet, jedoch mindestens 90 % der Reste R¹ Methylreste sind,
R² folgende Bedeutung haben kann:
a) Alkylreste mit 1 bis 20 Kohlenstoffatomen, Aryl- oder Aralkylreste,
b) Epoxyreste, die über Si-C-Bindungen mit Si-Atomen des Polysiloxans verknüpft sind,
c) Reste der allgemeinen Formel -R³OH,
wobei
R³ ein zweiwertiger Alkylenrest mit 3 bis 11 Kohlenstoffatomen ist,
a einen Wert von 1 bis 1000 und
b einen Wert von 0 bis 10 hat,
mit der Maßgabe, daß im durchschnittlichen Organopolysiloxanmolekül mindestens jeweils ein Rest R² die Bedeutung b) und die Bedeutung c) hat.

2. Polysiloxane nach Anspruch 1, dadurch gekennzeichnet, daß R³ ein zweiwertiger Alkylenrest mit 3 bis 6 Kohlenstoffatomen ist.

3. Polysiloxane nach Anspruch 2, dadurch gekennzeichnet, daß a einen Wert von 5 bis 200 und b einen Wert von 0 bis 2 hat.

4. Polysiloxane nach Anspruch 2 oder 3, dadurch gekennzeichnet, daß b einen Wert von 0 hat.

5. Polysiloxane nach einem oder mehreren der vorhergehenden Ansprüche, dadurch gekennzeichnet, daß R¹ Methylreste bedeutet.

6. Verfahren zur Herstellung der Polysiloxane nach Anspruch 1 bis 5, dadurch gekennzeichnet, daß man Organopolysiloxane der allgemeinen durchschnittlichen Formel 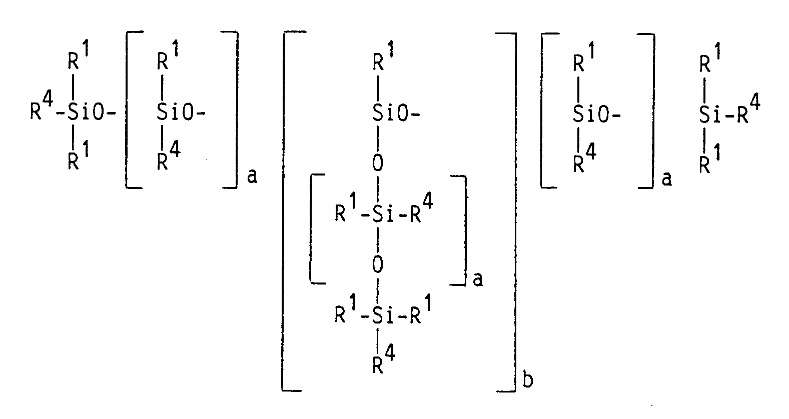 wobei
R¹ im Molekül gleich oder verschieden ist und Alkylreste mit 1 bis 4 Kohlenstoffatomen bedeutet, jedoch mindestens 90 % der Reste R¹ Methylreste sind,
R⁴ folgende Bedeutung haben kann:
a) Alkylreste mit 1 bis 20 Kohlenstoffatomen, Aryl- oder Aralkylreste,
b) Epoxyreste, die über Si-C-Bindungen mit Si-Atomen des Polysiloxans verknüpft sind,
c) Wasserstoffreste,
a einen Wert Von 1 bis 1000 und
b einen Wert von 0 bis 10 hat,
mit der Maßgabe, daß im durchschnittlichen Organopolysiloxanmolekül mindestens jeweils ein Rest R⁴ die Bedeutung b) und die Bedeutung c) hat,
mit Verbindungen der allgemeinen Formel R⁵OH, wobei R⁵ ein Alkenylrest mit einer endständigen olefinischen Doppelbindung, welcher 3 bis 11 Kohlenstoffatome aufweist, ist, in Gegenwart eines Katalysators und gegebenenfalls in Gegenwart eines inerten Lösungsmittels bei Temperaturen von 50 bis 150°C in an sich bekannter Weise und in solchen Mengenverhältnissen umsetzt, daß das Epoxysiloxan im durchschnittlichen Molekül mindestens einen Rest -R³OH aufweist.

7. Verfahren zur Herstellung der Polysiloxane nach Anspruch 1 bis 5, dadurch gekennzeichnet, daß man Organopolysiloxane der allgemeinen durchschnittlichen Formel 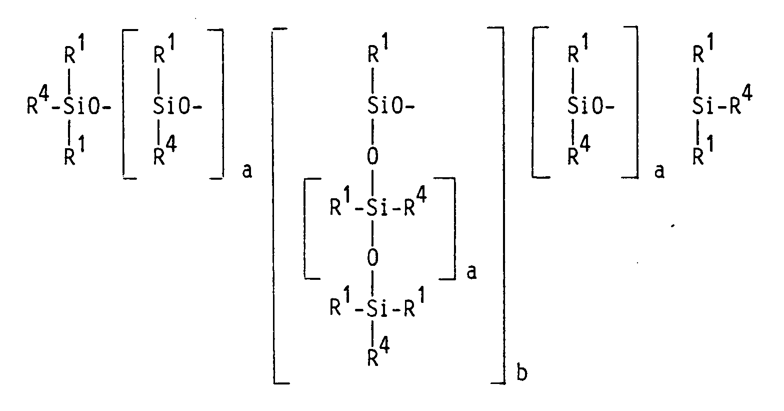 wobei
R¹ im Molekül gleich oder verschieden ist und Alkylreste mit 1 bis 4 Kohlenstoffatomen bedeutet, jedoch mindestens 90 % der Reste R¹ Methylreste sind,
R⁴ folgende Bedeutung haben kann:
a) Alkylreste mit 1 bis 20 Kohlenstoffatomen, Aryl- oder Aralkylreste,
b) Wasserstoffreste,
a einen Wert von 1 bis 1000 und
b einen Wert von 0 bis 10 hat,
mit der Maßgabe, daß im durchschnittlichen Organopolysiloxanmolekül mindestens zwei Reste R⁴ die Bedeutung eines Wasserstoffrestes haben,
mit einem Gemisch aus Epoxiden, welche endständig eine olefinische Doppelbindung aufweisen, und Verbindungen der allgemeinen Formel R⁵OH, wobei R⁵ ein Alkenylrest mit einer endständigen olefinischen Doppelbindung, welcher 3 bis 11 Kohlenstoffatome aufweist, ist, in Gegenwart eines Katalysators und gegebenenfalls in Gegenwart eines inerten Lösungsmittels bei Temperaturen von 50 bis 150°C in an sich bekannter Weise und in solchen Mengenverhältnissen umsetzt, daß das Organopolysiloxan im durchschnittlichen Molekül mindestens einen Epoxyrest und mindestens einen Rest -R³OH aufweist.

8. Verwendung der Organopolysiloxane nach Anspruch 1 bis 5 alleine oder in Mischung mit Epoxygruppen aufweisenden Verbindungen, insbesondere Organopolysiloxanen, die frei von -R³OH-Gruppen sind, als härtbare Beschichtungsmittel mit abhäsiven Eigenschaften, als Vergußmassen und als Beschichtungsmittel für Glasfasern.

## Claims

1. Organopolysiloxanes containing curable epoxy groups, of the general, average formula 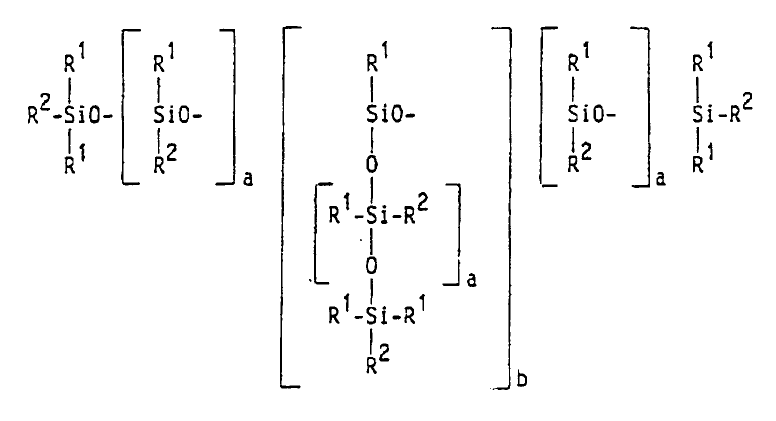 in which
R¹ is at each occurrence in the molecule identical or different and denotes alkyl radicals of 1 to 4 carbon atoms, although at least 90% of the radicals R¹ are methyl radicals,
R² may have the following meaning:
a) alkyl radicals of 1 to 20 carbon atoms, aryl or aralkyl radicals,
b) epoxy radicals which are linked to Si atoms of the polysiloxane via Si-C bonds,
c) radicals of the general formula -R³OH, where
R³ is a divalent alkylene radical of 3 to 11 carbon atoms,
a has a value from 1 to 1000 and
b has a value from 0 to 10,
with the proviso that in the average organopolysiloxane molecule at least one radical R² each has the meaning b) and the meaning c).

2. Polysiloxanes according to Claim 1, characterized in that R³ is a divalent alkylene radical of 3 to 6 carbon atoms.

3. Polysiloxanes according to Claim 2, characterized in that a has a value from 5 to 200 and b has a value from 0 to 2.

4. Polysiloxanes according to Claim 2 or 3, characterized in that b has a value of 0.

5. Polysiloxanes according to one or more of the preceding claims, characterized in that R¹ denotes methyl radicals.

6. Process for the preparation of the polysiloxanes according to Claim 1 to 5, characterized in that organopolysiloxanes of the general, average formula 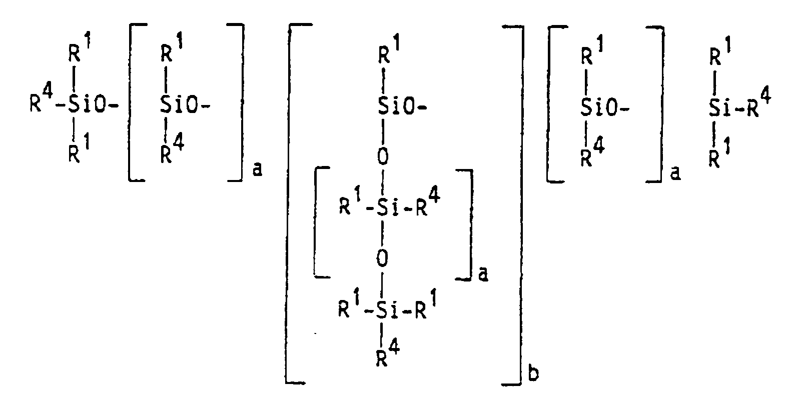 in which
R¹ is at each occurrence in the molecule identical or different and denotes alkyl radicals of 1 to 4 carbon atoms, although at least 90% of the radicals R¹ are methyl radicals,
R⁴ may have the following meaning:
a) alkyl radicals of 1 to 20 carbon atoms, aryl or aralkyl radicals,
b) epoxy radicals which are linked to Si atoms of the polysiloxane via Si-C bonds,
c) hydrogen atoms,
a has a value from 1 to 1000 and
b has a value from 0 to 10,
with the proviso that in the average organopolysiloxane molecule at least one radical R⁴ each has the meaning b) and the meaning c),
are reacted with compounds of the general formula R⁵OH, where R⁵ is an alkenyl radical having a terminal olefinic double bond and containing 3 to 11 carbon atoms, in the presence of a catalyst and, if desired, in the presence of an inert solvent at temperatures from 50 to 150°C in a manner known per se and in quantitative ratios such that the epoxysiloxane contains, in the average molecule, at least one radical -R³OH.

7. Process for the preparation of the polysiloxanes according to Claim 1 to 5, characterized in that organopolysiloxanes of the general, average formula 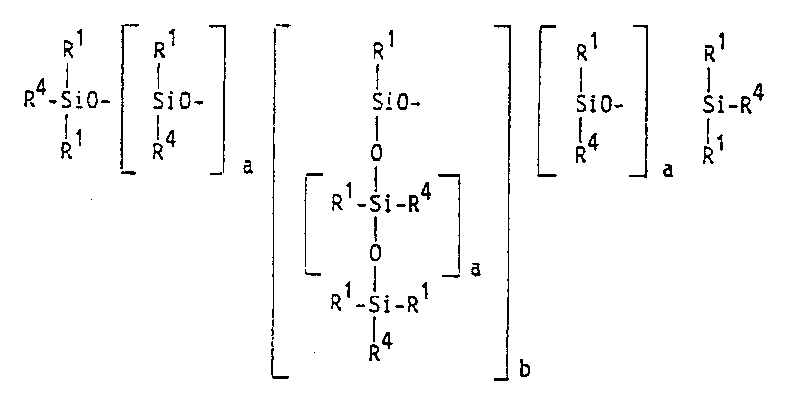 in which
R¹ at each occurrence in the molecule is identical or different and denotes alkyl radicals of 1 to 4 carbon atoms, although at least 90% of the radicals R¹ are methyl radicals,
R⁴ may have the following meaning:
a) alkyl radicals of 1 to 20 carbon atoms, aryl or aralkyl radicals,
b) hydrogen atoms,
a has a value from 1 to 1000 and
b has a value from 0 to 10,
with the proviso that in the average organopolysiloxane molecule at least two radicals R⁴ have the meaning of a hydrogen atom,
are reacted with a mixture of epoxides which contain a terminal olefinic double bond, and with compounds of the general formula R⁵OH, where R⁵ is an alkenyl radical having a terminal olefinic double bond and containing 3 to 11 carbon atoms, in the presence of a catalyst and, if desired, in the presence of an inert solvent at temperatures from 50 to 150°C in a manner known per se and in quantitative ratios such that the organopolysiloxane contains, in the average molecule, at least one epoxy radical and at least one radical -R³OH.

8. Use of the organopolysiloxanes according to Claim 1 to 5, alone or as a mixture with compounds containing epoxy groups, especially with organopolysiloxanes which are free from -R³OH groups, as curable coating compositions having abhesive properties, as sealing compounds and casting compositions and as coating compositions for glass fibres.

## Revendications

1. Organopolysiloxanes contenant des groupes époxy durcissables, répondant à la formule générale moyenne : 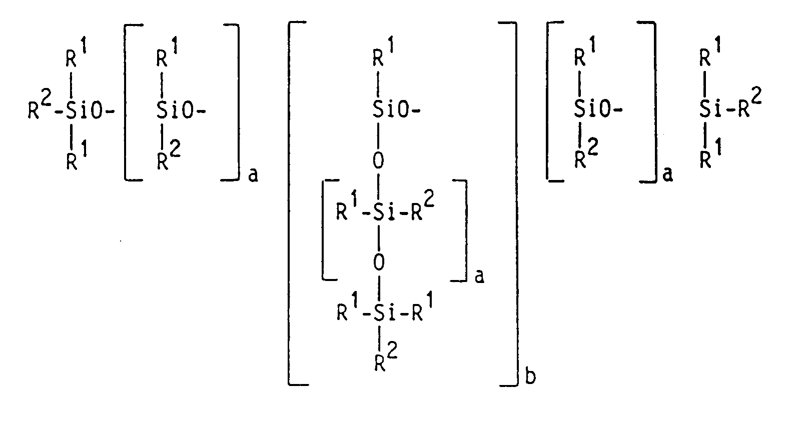 dans laquelle
R¹ est identique ou différent dans la molécule et signifie des restes alkyles ayant de 1 à 4 atomes de carbone, au moins 90 % des restes R¹ signifiant toutefois un reste méthyle,
R² peut avoir la signification suivante :
a) restes alkyles ayant de 1 à 20 atomes de carbone, restes aryles ou aralkyles,
b) restes époxy qui sont liés à des atomes de silicium du polysiloxane par l'intermédiaire de liaisons Si-C-,
c) restes de formule générale -R³OH, où R³ est un reste alkylène bivalent ayant de 3 à 11 atomes de carbone,
a vaut de 1 à 1 000, et
b vaut de 0 à 10,
avec la condition qu'au moins un reste R² ait la signification b) et qu'au moins un reste R² ait la signification c) dans la molécule moyenne de l'organopolysiloxane.

2. Polysiloxanes selon la revendication 1, caractérisés en ce que R³ est un reste alkylène bivalent ayant de 3 à 6 atomes de carbone.

3. Polysiloxanes selon la revendication 2, caractérisés en ce que a vaut de 5 à 200, et b vaut de 0 à 2.

4. Polysiloxanes selon la revendication 2 ou 3, caractérisés en ce que b baut 0.

5. Polysiloxanes selon une ou plusieurs des revendications précédentes, caractérisés en ce que R¹ signifie un reste méthyle.

6. Procédé de préparation des polysiloxanes selon les revendications 1 à 5, caractérisé en ce qu'on fait réagir des organopolysiloxanes de formule générale moyenne : 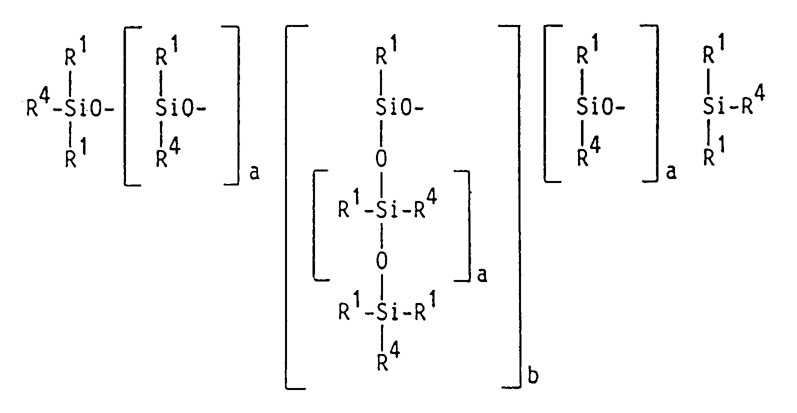 dans laquelle
R¹ est identique ou différent dans la molécule et signifie des restes alkyles ayant de 1 à 4 atomes de carbone, au moins 90 % des restes R¹ signifiant toutefois des restes méthyle,
R⁴ peut avoir la signification suivante :
a) restes alkyles ayant de 1 à 20 atomes de carbone, restes aryles ou restes aralkyles,
b) restes époxy qui sont liés à des atomes de silicium du polysiloxane par l'intermédiaire de liaisons Si-C-,
c) restes d'hydrogène,
a vaut de 1 à 1 000, et
b vaut de 0 à 10,
avec la condition qu'au moins un reste R⁴ ait la signification b) et qu'au moins un reste R⁴ ait la signification c) dans la molécule moyenne de l'organopolysiloxane,
avec des composés de formule générale R⁵OH, où R⁵ est un reste alkényle avec une liaison double oléfinique en fin de chaîne, contenant de 3 à 11 atomes de carbone, en présence d'un catalyseur et éventuellement en présence d'un solvant inerte, à des températures de 50 à 150°C, d'une manière connue en soi, et à des rapports quantitatifs tels que l'époxysiloxane contienne au moins un reste -R³OH dans la molécule moyenne.

7. Procédé de préparation des polysiloxanes selon les revendications 1 à 5, caractérisé en ce qu'on fait réagir des organopolysiloxanes de formule générale moyenne : 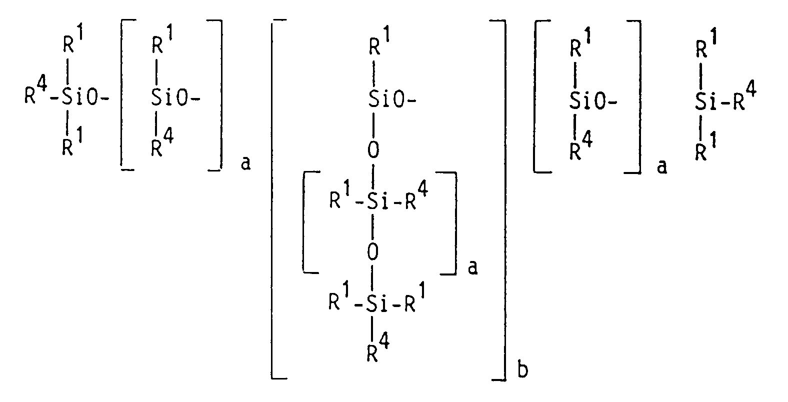 dans laquelle
R¹ est identique ou différent dans la molécule et signifie des restes alkyles ayant de 1 à 4 atomes de carbone, au moins 90 % des restes R¹ signifiant toutefois des restes méthyle,
R⁴ peut avoir la signification suivante :
a) restes alkyles ayant de 1 à 20 atomes de carbone, restes aryles ou restes aralkyles,
b) restes d'hydrogène,
a vaut de 1 à 1 000, et
b vaut de 0 à 10,
avec la condition qu'au moins deux restes R⁴ aient la signification d un reste d'hydrogène dans la molécule moyenne de l'organopolysiloxane,
avec un mélange d'époxydes qui contiennent une liaison double oléfinique en fin de chaîne, et de composés de formule générale R⁵OH, où R⁵ est un reste alkényle avec une liaison double oléfinique en fin de chaîne, contenant de 3 à 11 atomes de carbone, en présence d'un catalyseur et éventuellement en présence d'un solvant inerte, à des températures de 50 à 150°C, d'une manière connue en soi et à des rapports quantitatifs tels que l'organopolysiloxane contienne au moins un reste époxy et au moins un reste -R³OH dans la molécule moyenne.

8. Utilisation des organopolysiloxanes selon les revendications 1 à 5, individuellement ou mélangés avec des composés contenant des groupes époxy, en particulier des organopolysiloxanes qui ne contiennent pas de groupes -R³OH, comme des agents de revêtement durcissables ayant des propriétés anti-adhésives, comme des masses de scellement et comme des agents de revêtement pour des fibres de verre.
